# DEMANDE DE BREVET EUROPEEN

(11) **EP 1 283 433 A2**
(43) Date de publication de la demande: **12.02.2003**
(21) Numéro de dépôt: 02291915.3
(22) Date de dépôt: 29.07.2002
(51) Int. Cl.: G02F 1/01, G02B 6/293, G02B 6/34

(54) **Compensateur de dispersion large bande accordable**

(30) Priorité: 06.08.2001 FR 0110498
(71) Demandeur: ALCATEL, 75008 Paris (FR)
(72) Inventeur: Verdrager, Véronique, 91190 Gif-sur-Yvette (FR); Guerin, Jean-Jacques, 92160 Antony (FR); Riant, Isabelle, 91400 Orsay (FR)
(74) Mandataire: Lamoureux, Bernard

(57) **Abrégé**

L'invention concerne un dispositif de compensation de la dispersion chromatique comprenant un réseau de Bragg long à pas variable inscrit sur une fibre optique (10) dans laquelle se propage une pluralité de canaux de transmission multiplexés en longueur d'onde, caractérisé en ce que le dispositif comporte des moyens de génération d'un gradient thermique généré par au moins deux moyens de chauffage (20) répartis sur ledit réseau et contrôlés indépendamment l'un de l'autre de manière à compenser simultanément la dispersion chromatique sur plusieurs desdits canaux de transmission.

## Description

La présente invention concerne le domaine des télécommunications à haut débit sur fibre optique. Plus spécifiquement, l'invention s'applique à une fibre photosensible comportant un filtre à réseau de Bragg particulièrement adapté pour compenser les effets de dispersion chromatique et de pente de dispersion chromatique dans une liaison par fibre optique.

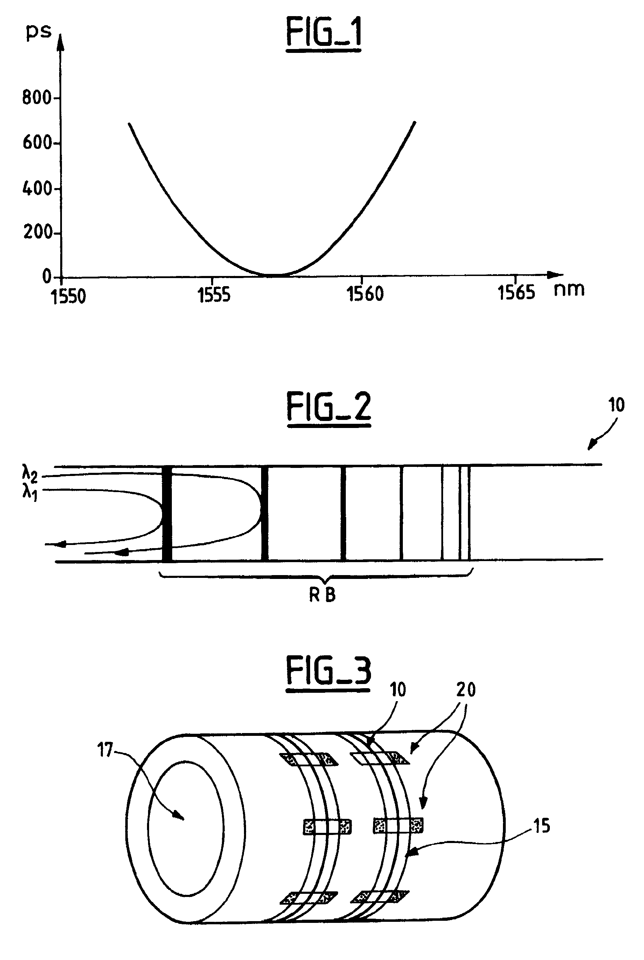

La dispersion chromatique se manifeste lors de la propagation d'impulsions de courte durée sur une grande distance par une dispersion progressive des vitesses de groupe de l'impulsion au cours de la propagation. La figure 1 représente pour illustration la pente de la dispersion chromatique. Les effets de la dispersion chromatique sont cumulés sur la longueur de la liaison, et sont de ce fait plus importants pour les liaisons longues. En outre, la dispersion chromatique provoque un élargissement temporel des impulsions à véhiculer sur la liaison (pente de la dispersion chromatique). Ainsi, si les impulsions sont suffisamment espacées dans le temps, le risque d'erreur à la réception est minimisé, en revanche, dans le cas de systèmes à haut débit, l'élargissement temporel d'une impulsion peut devenir du même ordre que l'espacement entre les impulsions, entraînant ainsi un faux d'erreur inacceptable pour l'opérateur de la liaison. Par exemple, vers 1.55µm, l'ordre de grandeur de l'élargissement temporel d'une impulsion est de 17 ps/nm/km. Cette déformation résulte du fait que vers 1.55µm, les composantes « haute fréquence » du spectre de l'impulsion se propagent plus vite que les composantes « basse fréquence », ce qui entraîne une redistribution des composantes spectrales au cours de la propagation.

Or, il est bien connu de l'art antérieur que les réseaux de Bragg à pas variable (dit « chirpé ») permettent de réaliser une compensation de la dispersion chromatique.

Un schéma de principe du fonctionnement d'un compensateur de dispersion chromatique à l'aide d'un réseau de Bragg à pas variable est illustré sur la figure 2. Classiquement, l'inscription d'un réseau de Bragg RB à pas variable dans le coeur de la fibre 10 se fait à travers un masque de phase dont le pas varie sur la longueur de la fibre de manière à modifier la longueur d'onde réfléchie par le réseau selon la longueur de la fibre parcourue par l'onde lumineuse. Une variation linéaire (figure 2) du pas du réseau, et donc de la longueur d'onde de réflexion le long de la fibre, peut être utilisée pour corriger les effets de la dispersion chromatique de premier ordre (classiquement désignée par la dispersion chromatique), et une variation quadratique du pas peut être utilisée pour corriger les effets de la dispersion chromatique de deuxième ordre (classiquement désignée par la pente de la dispersion chromatique). La variation du pas du réseau induit un retard variable de la réflexion de l'onde sur le réseau, ce qui permet de corriger les effets de la dispersion. Un tel réseau de Bragg est généralement associé à un circulateur optique.

Dans les liaisons optiques à haut débit, la technique de transmission sur plusieurs canaux multiplexés en longueur d'onde est couramment utilisée (connue sous le terme de WDM pour Wavelength Division Multiplexing en anglais). Selon la technique du WDM, une source de lumière à large bande est couplée à des moyens de séparation de longueurs d'onde discrètes et plusieurs canaux émettent ainsi simultanément un signal à une longueur d'onde donnée dans la fibre optique de liaison. Les effets de la dispersion chromatique sont donc dupliqués pour chaque longueur d'onde émise sur chaque canal. Parvenir à compenser la dispersion chromatique, du premier et du second ordre, sur une large bande d'émission, c'est à dire sur une pluralité de canaux multiplexés en longueur d'onde, nécessite soit de réaliser une concaténation de réseaux de Bragg qui compensent chacun une partie des effets de la dispersion pour une portion donnée de la bande spectrale, soit de réaliser un très long réseau de Bragg chirpé. Un tel réseau de Bragg de grande longueur est exposé dans la publication de conférence de OFC'01, PD12, 2001, de J.F. Brennan, E. Hernandez, J.A. Valenti, P.G. Sinha, M.R. Mattthews, D.E. Elder, G.A. Beauchesne, C.H. Byrd : « Dispersion and dispersion-slope correction with a fiber Bragg grating over the full C-band ».

Un autre problème auquel peuvent être soumis les opérateurs de liaisons optiques est l'évolution de la dispersion chromatique au cours du temps, due par exemple aux variations climatiques ou au vieillissement de la liaison optique.

Une telle évolution nécessite une adaptation au niveau du réseau de transmission et en particulier au niveau des compensateurs de dispersion utilisés. Une liaison optique est typiquement composée d'une pluralité de tronçons de fibre optique que relient une pluralité de stations ou répéteurs dans lesquels les signaux optiques à propager sont amplifiés avant d'être transmis au tronçon suivant. Il est généralement nécessaire de prévoir des compensateurs de dispersion chromatique espacés régulièrement dans la liaison. Or, il n'est pas envisageable de changer les compensateurs de dispersion lorsqu'il y a une modification climatique ou lorsque la liaison optique et les éléments qui la composent vieillissent.

Ainsi, il a déjà été proposé dans l'art antérieur des compensateurs de dispersion accordables, c'est à dire dont les caractéristiques peuvent être modifiées à distance pour permettre l'usage du même dispositif de compensation pour des longueurs d'onde variables.

On sait déjà qu'une action mécanique et/ou thermique sur une portion de fibre optique modifie les propriétés du réseau photo inscrit sur cette portion. En particulier, le pas du réseau peut varier sous l'influence d'une action mécanique ou thermique. Le brevet US 5 671 307 propose d'inscrire un réseau de Bragg sur une portion de fibre optique et d'imposer une variation du pas du réseau par application d'un gradient thermique répartit sur ledit réseau. Dans cette invention, le réseau de Bragg n'est pas inscrit directement avec un chirp, c'est à dire avec un pas variable, mais c'est le gradient thermique qui va imposer une variation du pas au réseau selon la longueur d'onde à réfléchir. La technique proposée dans ce brevet n'est donc applicable qu'à un seul canal pour une seule longueur d'onde accordable.

Par ailleurs, la publication de conférence de OFC'99, 20/FA7-1, de J.X. Cai, K.M. Feng, A.E. Willner, V. Grubsky, D.S. Starodubov et J. Feinberg : « Sample nonlinearly-chirped fiber-Bragg-grating for the tunable dispersion compensation of many WDM channels simultaneously », propose d'appliquer une contrainte mécanique (par étirement) sur une portion de fibre comportant un réseau de Bragg chirpé. Une accordabilité des longueurs d'onde réfléchies peut ainsi être obtenue selon l'emplacement et la force de la contrainte mécanique appliquée au réseau. Cette solution est cependant limitée à trois canaux de longueur d'onde. Or, à titre d'exemple, un réseau de transmission multiplexé en longueur d'onde à 25 GHz comporte 160 canaux sur la bande C.

La présente invention propose de réaliser un compensateur de dispersion chromatique accordable pour chaque canal d'un réseau dense multiplexé en longueur d'onde (DWDM pour Dense Wavelength Division Multiplexing). Selon l'invention, un unique composant est réalisé pour remplir la fonction de compensateur de dispersion simultanément pour une pluralité de canaux de transmission d'un système WDM.

A cet effet, l'invention propose d'appliquer un gradient thermique à un réseau de Bragg à pas variable de manière à accorder la réflectivité pour chaque longueur d'onde transmise afin de garantir la compensation chromatique, du premier et/ou du deuxième ordre, sur l'ensemble des canaux de transmission.

Plus spécifiquement, l'invention concerne un dispositif de compensation de la dispersion chromatique comprenant un réseau de Bragg long à pas variable inscrit sur une fibre optique (10) dans laquelle se propage une pluralité de canaux de transmission multiplexés en longueur d'onde, caractérisé en ce que le dispositif comporte des moyens de génération d'un gradient thermique généré par au moins deux moyens de chauffage (20) répartis sur ledit réseau et contrôlés indépendamment l'un de l'autre de manière à compenser simultanément la dispersion chromatique sur plusieurs desdits canaux de transmission.

Selon les modes de réalisation, les moyens de chauffage sont constitués par un film thermique ou par des éléments Peltiers.

Selon une caractéristique, la fibre optique est disposée dans une rainure thermiquement conductrice.

Selon les applications, le gradient thermique présente une distribution linéaire ou une distribution quadratique.

Selon une autre application, le gradient thermique présente une température constante sur un point du réseau correspondant à la position de réflexion de la longueur d'onde centrale d'au moins un canal de transmission.

Selon les modes de réalisation, le réseau de Bragg présente une variation continue ou discontinue du pas.

Selon une caractéristique, le contrôle des moyens de chauffage est dynamique.

Les particularités et avantages de la présente invention apparaîtront plus clairement à la lecture de la description qui suit, faite à titre d'exemple illustratif et non limitatif, en référence aux figures annexées dans lesquelles :
- la figure 1, déjà décrite, illustre une pente de dispersion chromatique à corriger ;
- la figure 2, déjà décrite, est un schéma de principe d'un compensateur de dispersion chromatique ;
- la figure 3 illustre le dispositif de compensation de dispersion chromatique selon l'invention ;
- la figure 4 est un graphe illustrant la variation du pas du réseau de Bragg en fonction de la distribution thermique dans une application particulière de l'invention ;
- les figures 5 et 6 sont des graphes illustrant les longueurs d'onde réfléchies le long du réseau de Bragg en fonction de la distribution thermique respectivement pour un réseau linéaire et pour un réseau discontinu.

Les réseaux de Bragg sont régis par la relation de Bragg suivante :
λ_{B}= 2 neff Λ, où neff est l'indice effectif du mode guidé du et Λ le pas du réseau.

Il ressort de cette relation que la longueur d'onde de Bragg λ_{B} est sensible aux modifications de l'indice effectif, ce qui permet de réaliser une accordabilité de la longueur d'onde de réflexion par une action sur la fibre au niveau du réseau de Bragg. Ainsi, par exemple, un chauffage localisé de la fibre va modifier localement neff et de là λ_{B}.

En référence à la figure 3, l'invention propose de soumettre une fibre optique 10 comportant un réseau de Bragg long chirpé à un gradient de température réparti sur ledit réseau. Un réseau de grande longueur à pas variable permet de réaliser une compensation de dispersion chromatique selon un mécanisme connu et précédemment décrit en référence à l'art antérieur. En outre, le gradient de température permet de générer une distribution de température sur l'ensemble du réseau de Bragg et d'accorder ainsi, le long du réseau, les longueurs d'onde réfléchies.

Ce gradient de température est généré par au moins deux moyens de chauffage 20 distincts et contrôlés indépendamment l'un de l'autre. Préférentiellement, une pluralité de moyens de chauffage 20 sont prévus et répartis à distance régulière les uns des autres sur l'ensemble de la portion de fibre comprenant le réseau de Bragg afin d'obtenir n'importe quelle distribution de température. La distribution de température peut être linéaire ou quadratique pour une correction de la dispersion chromatique de premier ordre ou de la pente de la dispersion chromatique.

Selon un mode de réalisation avantageux, la fibre optique 10 est placée dans une rainure ménagée dans un ruban 15 constitué d'un matériau thermiquement conducteur, ce ruban 15 étant par exemple enroulé autour d'un cylindre 17 en matériau thermiquement isolant. Les moyens de chauffage 20 peuvent être constitués d'éléments Peltier connus en soi, ou d'un film thermique recouvrant la fibre 10. Typiquement, les moyens de chauffage de type Peltier peuvent produire une variation de température allant de 0°C à 60°C. Ces moyens de chauffage 20 sont contrôlés par des moyens non illustrés pouvant facilement être mis en oeuvre par un homme du métier pour obtenir une accordabilité dynamique.

La sensibilité thermique du pas d'un réseau de Bragg est donnée par l'équation théorique suivante : dΛ /dT = 10 pm/°C.

Donc, si ΔΛ₀ est la variation initiale du réseau chirpé, et ΔT le gradient de température linéaire entre les deux extrémités du réseau de Bragg, alors la variation résultante du pas en nanomètre sera donnée par la relation : ΔΛ = ΔΛ₀ + 0.01 ΔT.

Or, la dispersion étant reliée au pas du réseau, une variation dudit pas induit une modification de la dispersion chromatique D selon l'équation approximative :
D = 10 L / ΔΛ, avec L la longueur du réseau de Bragg.

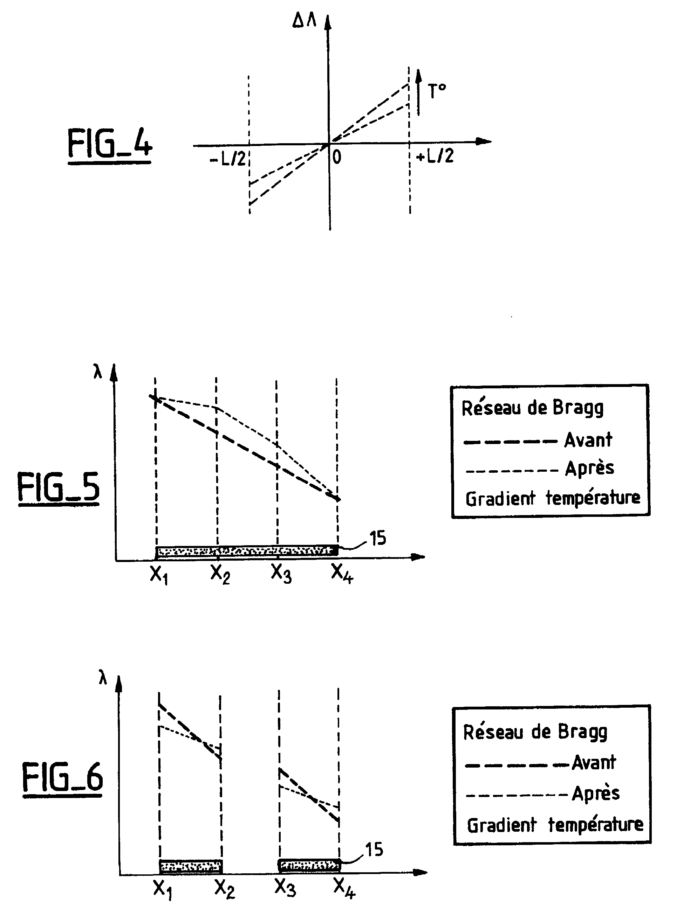

Selon un mode de réalisation particulier, illustré par le graphe de la figure 4, la température peut demeurer constante en un point donné du réseau de Bragg correspondant à la position de réflexion de la longueur d'onde centrale de transmission et varier linéairement de part et d'autre de ce point afin d'éviter un décalage spectral de toutes les longueurs d'onde.

Les graphes des figures 5 et 6 illustrent des modes de mise en oeuvre particuliers de l'invention dans le cas d'un réseau de Bragg à pas variable continu et dans le cas d'un réseau de Bragg à pas variable discontinu. Les points Xᵢ représentent les emplacements des moyens de chauffage 20 le long de la fibre positionnée sur le matériau conducteur 15. Un gradient de température linéaire est produit entre deux points successifs Xᵢ et Xᵢ₊₁ en particulier grâce au matériau conducteur 15 sur lequel est déposée la fibre optique.

On constate de par la figure 5 que le contrôle indépendant des points chauffants Xᵢ permet d'induire n'importe quelle modification d'une longueur d'onde λ de réflexion en n'importe quel point du réseau.

Selon une variante de réalisation, le réseau de Bragg chirpé peut être inscrit dans la fibre de manière discontinue. Des moyens de chauffage sont alors disposés à chaque extrémité de chaque portion de réseau. La distribution thermique entre X₁ et X₂ est totalement indépendante de la distribution thermique entre X₃ et X₄, permettant ainsi une accordabilité de la dispersion pour chaque canal de transmission indépendamment.

## Revendications

1. Dispositif de compensation de la dispersion chromatique comprenant un réseau de Bragg long à pas variable inscrit sur une fibre optique (10) dans laquelle se propage une pluralité de canaux de transmission multiplexés en longueur d'onde, **caractérisé en ce que** le dispositif comporte des moyens de génération d'un gradient thermique généré par au moins deux moyens de chauffage (20) répartis sur ledit réseau et contrôlés indépendamment l'un de l'autre de manière à compenser simultanément la dispersion chromatique sur plusieurs desdits canaux de transmission.

2. Dispositif de compensation de la dispersion chromatique selon la revendication 1, **caractérisé en ce que** les moyens de chauffage sont constitués par un film thermique.

3. Dispositif de compensation de la dispersion chromatique selon la revendication 1, **caractérisé en ce que** les moyens de chauffage sont constitués par des éléments Peltiers.

4. Dispositif de compensation de la dispersion chromatique selon l'une quelconque des revendications précédentes, **caractérisé en ce que** la fibre optique est disposée sur un matériau thermiquement conducteur (15).

5. Dispositif de compensation de la dispersion chromatique selon l'une quelconque des revendications 1 à 4, **caractérisé en ce que** le gradient thermique présente une distribution linéaire.

6. Dispositif de compensation de la dispersion chromatique selon l'une quelconque des revendications 1 à 4, **caractérisé en ce que** le gradient thermique présente une distribution quadratique.

7. Dispositif de compensation de la dispersion chromatique selon l'une quelconque des revendications 1 à 6, **caractérisé en ce que** le gradient thermique présente une température constante sur un point du réseau correspondant à la position de réflexion de la longueur d'onde centrale d'au moins un canal de transmission.

8. Dispositif de compensation de la dispersion chromatique selon l'une quelconque des revendications 1 à 7, **caractérisé en ce que** le réseau de Bragg présente une variation continue du pas.

9. Dispositif de compensation de la dispersion chromatique selon l'une quelconque des revendications 1 à 7, **caractérisé en ce que** le réseau de Bragg présente une variation discontinue du pas.

10. Dispositif de compensation de la dispersion chromatique selon l'une quelconque des revendications précédentes, **caractérisé en ce que** le contrôle des moyens de chauffage (20) est dynamique.
